# EUROPEAN PATENT APPLICATION

(11) **EP 4 420 942 A1**
(43) Date of publication of application: **28.08.2024**
(21) Application number: 24159497.7
(22) Date of filing: 23.02.2024
(51) Int. Cl.: B60T 13/74, B64C 25/44, F16D 55/02, F16D 55/36, F16D 65/18, F16D 121/24

(54) **BRAKE ASSEMBLY WITH ELECTRIC BRAKE ACTUATORS AND METHOD**

(30) Priority: 24.02.2023 US 202318174482
(71) Applicant: Goodrich Corporation, Charlotte, NC 28217-4578 (US)
(72) Inventor: GEORGIN, Marc, Dayton, 45419 (US); BAINS, Resham, 45371, Tipp City (US)
(74) Representative: Dehns

(57) **Abstract**

In one aspect the invention relates to a brake assembly including a plurality of stator disks (124), a plurality of rotor disks (122) interleaved with the plurality of stator disks (124) and configured to apply a braking force to the wheel, a pressure plate (118) disposed adjacent a rotor disk of the plurality of rotor disks (122), a first electric brake actuator disposed adjacent the pressure plate (118) and configured to apply the braking force to the pressure plate (118), the first electric brake actuator including a parking brake mechanism, and a second electric brake actuator disposed adjacent the pressure plate (118) and configured to apply the braking force to the pressure plate (118).

In a further aspect the invention relates to a method for applying a parking brake.

## Description

### FIELD

The present disclosure generally relates to aircraft wheel and brake systems, and more specifically, to electric parking brake systems.

### BACKGROUND

Aircraft typically utilize brake systems on wheels to slow or stop the aircraft during landings, taxiing, and rejected takeoffs. The brake systems generally employ a brake stack comprising a series of friction disks that may be forced into sliding contact with one another during brake actuation to slow or stop the aircraft. Brake systems are typically either hydraulic or electric. Generally, electric brakes are heavier than the hydraulic versions, in part due to additional complexities of the electric brake actuators and parking brake mechanisms within the electric brake actuators. The parking brake function performed by the electric brake actuators may include applying electric power to apply a percentage of the maximum force of the electric brake actuator in order to lock the motor shaft in place. The electric power may then be removed while the electric brake actuator force is maintained by the parking brake mechanisms.

### SUMMARY

Disclosed herein is a brake assembly coupled to a wheel, including a plurality of stator disks, a plurality of rotor disks interleaved with the plurality of stator disks and configured to apply a braking force to the wheel, a pressure plate disposed adjacent a rotor disk of the plurality of rotor disks, a first electric brake actuator disposed adjacent the pressure plate and configured to apply the braking force to the pressure plate, the first electric brake actuator including a parking brake mechanism, and a second electric brake actuator disposed adjacent the pressure plate and configured to apply the braking force to the pressure plate.

In various embodiments, the brake assembly further includes a first plurality of wires coupled to the first electric brake actuator and to the second electric brake actuator, the first plurality of wires configured to transmit a braking signal to the first electric brake actuator and to the second electric brake actuator and a second plurality of wires coupled to the first electric brake actuator, the second plurality of wires configured to transmit a parking brake signal to the first electric brake actuator.

In various embodiments, the brake assembly further includes a third electric brake actuator disposed adjacent the pressure plate and configured to apply the braking force to the pressure plate, the third electric brake actuator including the parking brake mechanism and a fourth electric brake actuator disposed adjacent the pressure plate and configured to apply the braking force to the pressure plate. In various embodiments, the first electric brake actuator is disposed between the second electric brake actuator and the fourth electric brake actuator and opposite the third electric brake actuator.

In various embodiments, the first electric brake actuator is configured to receive a parking brake signal and to apply the braking force in response to the parking brake signal and wherein the second electric brake actuator is not configured to receive the parking brake signal. In various embodiments, the first electric brake actuator is configured to engage the parking brake mechanism after applying the braking force, the parking brake mechanism preventing the wheel from rotating.

Also disclosed herein is a system including a brake assembly coupled to a wheel, a first electric brake actuator configured to engage the brake assembly, the first electric brake actuator including a parking brake mechanism, a second electric brake actuator configured to engage the brake assembly, a controller, and a memory operatively coupled to the controller. The memory includes instructions stored thereon that, when executed by the controller, cause the controller to receive a first request to apply a first braking force to the brake assembly, send a first signal to the first electric brake actuator and to the second electric brake actuator to apply the first braking force to cause the wheel to stop rotating, receive a second request to engage the parking brake mechanism, and send a second signal to the first electric brake actuator to apply a second braking force to the brake assembly.

In various embodiments, the second braking force is twice the first braking force. In various embodiments, the system further includes a first plurality of wires operatively coupling the controller to the first electric brake actuator and to the second electric brake actuator, the first plurality of wires configured to transmit a braking signal and a second plurality of wires operatively coupling the controller to the first electric brake actuator, the second plurality of wires configured to transmit a parking brake signal.

In various embodiments, the system further includes a third electric brake actuator configured to engage the brake assembly, the third electric brake actuator including the parking brake mechanism and a fourth electric brake actuator configured to engage the brake assembly, wherein the first electric brake actuator is disposed between the second electric brake actuator and the fourth electric brake actuator and the second electric brake actuator is disposed between the first electric brake actuator and the third electric brake actuator.

In various embodiments, the first plurality of wires further operatively couples the controller to the third electric brake actuator and to the fourth electric brake actuator and the second plurality of wires further operatively couples the controller to the third electric brake actuator. In various embodiments, the instructions, when executed by the controller, further cause the controller to receive a third request to disengage the parking brake mechanism and send a disengage signal, in response to the third request, to the first electric brake actuator to disengage the parking brake mechanism. In various embodiments, the instructions, when executed by the controller, further cause the controller to send a third signal, after the parking brake mechanism is engaged, to the first electric brake actuator and to the second electric brake actuator, the third signal commanding the first electric brake actuator to stop applying the second braking force to the brake assembly, and the third signal commanding the second electric brake actuator to stop applying the first braking force to the brake assembly.

Also disclosed herein is a method including receiving, by a controller, a first request to apply a parking brake to a wheel, sending, by the controller, a brake signal to a first electric brake actuator to apply a braking force in response to the first request, the first electric brake actuator coupled to a first brake assembly, the first brake assembly coupled to the wheel, and the first brake assembly including the first electric brake actuator and a second electric brake actuator, sending, by the controller, a parking mechanism engage signal to the first electric brake actuator to engage the parking brake mechanism of the first electric brake actuator, and sending, by the controller, a signal to stop applying the braking force by the first electric brake actuator.

In various embodiments, the method further includes receiving, by the controller, a second request to disengage the parking brake and sending, by the controller, a disengage parking brake signal to the first electric brake actuator. In various embodiments, the method further includes receiving, by the controller, a third request to apply the braking force to the wheel to cause the wheel to stop rotating, the third request being received before the first request and sending, by the controller, a brake signal to the first electric brake actuator and to the second electric brake actuator. In various embodiments, the sending the signal to stop applying the braking force by the first electric brake actuator further includes sending the signal to stop applying the braking force to the second electric brake actuator.

In various embodiments, the first brake assembly further includes a third electric brake actuator and a fourth electric brake actuator, the method further including sending, by the controller, the engage parking brake signal to the third electric brake actuator. In various embodiments, the method further includes sending, by the controller, the engage parking brake signal to a fifth electric brake actuator coupled to a second brake assembly in response to the first request, the second brake assembly including the fifth electric brake actuator and a sixth electric brake actuator, the second brake assembly coupled to the wheel and sending, by the controller, the parking mechanism engage signal to the fifth electric brake actuator.

In various embodiments, the method further includes sending, by the controller, the engage parking brake signal to a seventh electric brake actuator coupled to a third brake assembly in response to the first request, the third brake assembly including the seventh electric brake actuator and an eighth electric brake actuator, the third brake assembly coupled to a second wheel and sending, by the controller, the parking mechanism engage signal to the seventh electric brake actuator.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates an aircraft having a brake system, in accordance with various embodiments.
FIG. 1B illustrates a cross-sectional view of a brake assembly, in accordance with various embodiments.
FIG. 2 illustrates a brake mechanism diagram for a brake assembly, in accordance with various embodiments.
FIG. 3 illustrates a system for controlling a brake assembly, in accordance with various embodiments.
FIG. 4 illustrates a flow diagram of a method for controlling a brake assembly, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein, in accordance with various embodiments, is an electric brake system for an aircraft that performs a parking brake functionality. The system disclosed herein may, in various embodiments, reduce the weight and complexity of the electric brake system. In accordance with various embodiments, the electric brake system includes a first plurality of electric brake actuators (EBAs) and a second plurality of EBAs, where the first plurality of EBAs include a parking brake mechanism and the second plurality of EBAs do not. A brake controller may control the first plurality of EBAs and the second plurality of EBAs simultaneously to perform typical braking operations. However, the brake controller may, in various embodiments, send a command to the first plurality of EBAs to apply a parking brake force, and not the second plurality of EBAs.

In various embodiments, the second plurality of EBAs may not be wired to perform the parking brake functionality. Removing the parking brake mechanisms and the accompanying wiring from the second plurality of EBAs may, in various embodiments, reduce the overall weight of the aircraft and/or the complexity of the braking system.

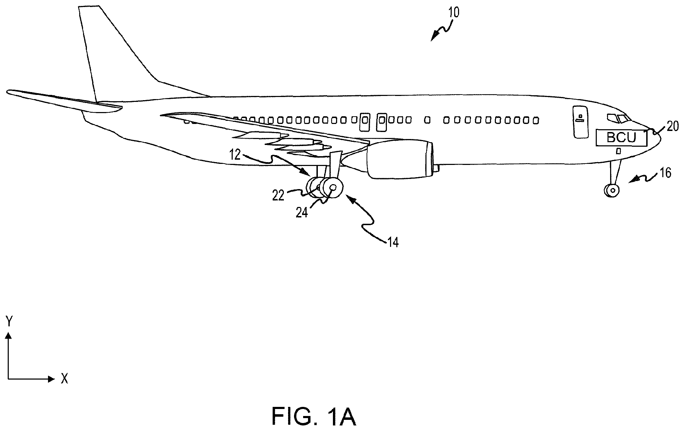

Referring to FIG. 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off, and land without damage. While the disclosure refers to the three landing gear configurations just referred, the disclosure nevertheless contemplates any number of landing gear configurations.

Aircraft 10 may further include a brake control unit (BCU) 20 for controlling a left main brake mechanism 22 of left main landing gear 12 and a right main brake mechanism 24 of right main landing gear 14. BCU 20 controls the application of brake mechanisms 22, 24 in response to input from aircraft 10 or an authorized user. BCU 20 further controls a parking brake functionality of brake mechanisms 22, 24 to secure aircraft 10 in place. A plurality of wires that independently control the braking and parking brake functionalities run through aircraft 10 from BCU 20 to left main brake mechanism 22 and right main brake mechanism 24.

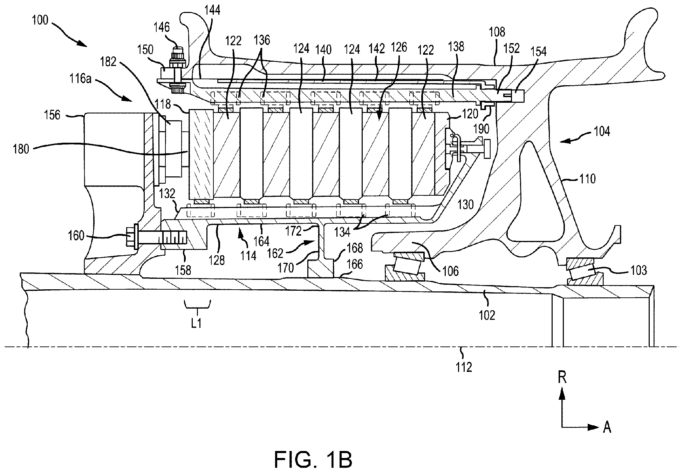

Referring now to FIG. 1B, there is schematically depicted a brake mechanism 100 that may be used by the aircraft 10 of FIG. 1A or any other appropriate aircraft. Brake mechanism 100 may be an example of left main brake mechanism 22 and/or right main brake mechanism 24 described above with respect to FIG. 1A. Brake mechanism 100 is mounted on an axle 102 for use with a wheel 104 disposed on and configured to rotate about axle 102 via one or more bearing assemblies 103. Wheel 104 includes a hub 106, a wheel well 108 concentric about hub 106 and a web portion 110 interconnecting hub 106 and wheel well 108. A central axis 112 extends through axle 102 and defines a center of rotation of wheel 104. A torque plate barrel 114 (sometimes referred to as a torque tube or barrel or a torque plate or back leg) is aligned concentrically with hub 106, and wheel 104 is rotatable relative to torque plate barrel 114.

Brake mechanism 100 includes an electric brake actuator (EBA) 116a, a pressure plate 118 disposed adjacent EBA 116a, an end plate 120 positioned a distal location from EBA 116a, and a plurality of rotor disks 122 interleaved with a plurality of stator disks 124 positioned intermediate pressure plate 118 and end plate 120. Pressure plate 118, the plurality of rotor disks 122, the plurality of stator disks 124, and end plate 120 together form a brake heat sink or brake stack 126. Pressure plate 118, end plate 120, and the plurality of stator disks 124 are mounted to torque plate barrel 114 and remain rotationally stationary relative to axle 102.

Torque plate barrel 114 may include an annular barrel or torque tube 128 and an annular plate or back leg 130. Back leg 130 is disposed at an end distal from EBA 116a and may be made monolithic with torque tube 128, as illustrated in FIG. 1B, or may be made as a separate annular piece and suitably connected to torque tube 128. Torque tube 128 has a plurality of circumferentially spaced and axially extending splines 132 disposed on an outer surface of the torque tube 128. The plurality of stator disks 124 and pressure plate 118 include notches or stator slots 134 on an inner periphery of the disks and the plate for engagement with splines 132, such that each disk and the plate are axially slidable with respect to torque tube 128.

End plate 120 is suitably connected to back leg 130 of torque plate barrel 114 and is held non-rotatable, together with the plurality of stator disks 124 and pressure plate 118, during a braking action. The braking action may include EBA 116a applying an amount of force between 0% and 100% of available EBA force to pressure plate 118. The plurality of rotor disks 122, interleaved between pressure plate 118, end plate 120, and the plurality of stator disks 124, each have a plurality of circumferentially spaced notches or rotor lugs 136 along an outer periphery of each disk for engagement with a plurality of torque bars 138 that is secured to or made monolithic with an inner periphery of wheel 104.

An actuating mechanism for the brake mechanism 100 includes a plurality of EBAs circumferentially spaced around an annular brake housing 156 (only one EBA, EBA 116a, is illustrated in FIG. 1B). Upon actuation, the plurality of EBAs affects a braking action by urging the pressure plate 118 and the plurality of stator disks 124 into frictional engagement with the plurality of rotor disks 122 and against end plate 120. Each of the plurality of EBAs (e.g., EBA 116a, etc.) includes a ram 180 configured to engage pressure plate 118 by extending a length, or distance, L1. An electric power is applied to the plurality of EBAs to actuate the plurality of EBAs causing ram 180 to extend and engage pressure plate 118. In various embodiments, the ram extension length may be proportional to an amount of braking force applied by brake mechanism. Through compression of the plurality of rotor disks 122 and the plurality of stator disks 124 between pressure plate 118 and end plate 120, the resulting frictional contact slows or stops or otherwise prevents rotation of wheel 104. The plurality of rotor disks 122 and the plurality of stator disks 124 are fabricated from various materials, such as carbon matrix composites, that enable the brake disks to withstand and dissipate the heat generated during and following a braking action.

The plurality of EBAs include a first subset of EBAs (e.g., 116a, etc.) having a parking brake mechanism 182, or a mechanical lock, and a second subset of EBAs without parking brake mechanism 182. Parking brake mechanism 182 may be engaged to maintain the frictional contact between ram 180 and pressure plate 118 after the electric power is removed from the EBA (e.g., EBA 116a, etc.). To engage the parking brake, first an electric power is applied to the first subset of EBAs (e.g., EBA 116a, etc.) causing ram 180 of each EBA to extend a length L1. Next, parking brake mechanism 182 is engaged to lock ram 180 at the extended length L1. Finally, the electric power is removed from the first subset of EBAs so that the braking force is retained without the application of the electric power.

Torque plate barrel 114 is secured to a stationary portion of the landing gear such as axle 102, preventing torque plate barrel 114 and the plurality of stator disks 124 from rotating during braking of the aircraft. Torque tube 128 portion of torque plate barrel 114 may be attached to annular brake housing 156 via an annular mounting surface 158, wherein bolt fasteners 160 secure torque plate barrel 114 to annular brake housing 156. A spacer member or pedestal 162 is positioned between an inner diameter surface 164 of torque tube 128 and an outer diameter surface 166 of axle 102. Pedestal 162 includes a radially inner surface or foot 168 for engaging axle 102, a web portion 170 radially outward of foot 168, and a head portion 172 for engaging inner diameter surface 164 of torque tube 128. Pedestal 162 augments support of torque plate barrel 114 within brake mechanism 100 generally and, more particularly, against axle 102. Pedestal 162 may be made monolithic with torque tube 128 portion of torque plate barrel 114.

A heat shield 140 is secured directly or indirectly to wheel 104 between a radially inward surface of wheel well 108 and the plurality of torque bars 138. As illustrated in FIG. 1B, heat shield 140 is concentric with wheel well 108 and may have a plurality of heat shield sections 142 disposed between respective, adjacent pairs of the plurality of torque bars 138. Heat shield 140, or heat shield sections 142, is spaced from the radially inward surface of wheel well 108 and secured in place by heat shield tabs 190, such that heat shield 140, or heat shield sections 142, is disposed generally parallel to the axis of rotation or central axis 112 of wheel 104 and intermediate the plurality of torque bars 138 and the radially inward surface of wheel well 108. In various embodiments, including for heavy-duty applications, heat shield 140, or heat shield sections 142, may be further secured in place by heat shield carriers 144.

The plurality of torque bars 138 is attached at axially inboard ends to the wheel 104 by torque bar bolts 146. Torque bar bolts 146 extend through respective holes in a flange 150 provided on wheel 104 as shown, which flange 150 for purposes of the present description is intended to be considered as part of wheel well 108. Each of the plurality of torque bars 138 may include a pin 152 or similar member at its axially outboard end (i.e., the end opposite the torque bar bolts 146) that is received within a hole 154 disposed proximate the web portion 110 of the wheel 104. Heat shield 140, or heat shield sections 142, is positioned adjacent a radially inward surface of wheel well 108 and secured in place by heat shield tabs 190.

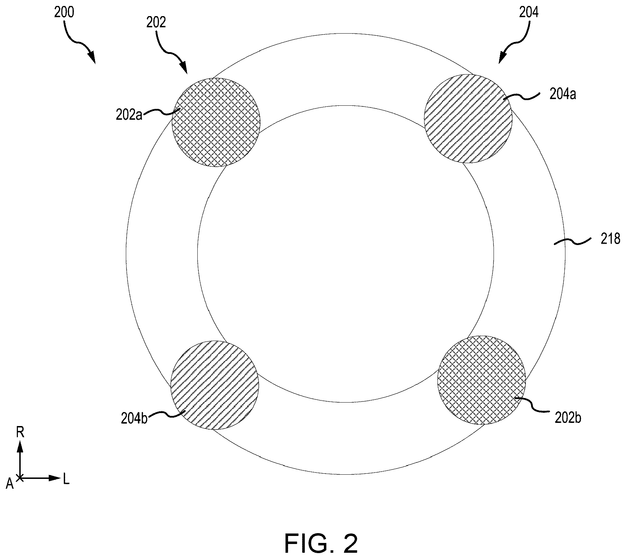

Referring now to FIG. 2, a brake mechanism diagram 200 of electric brake actuator positions for a brake mechanism is illustrated, in accordance with various embodiments. Brake mechanism diagram 200 illustrates positioning of pressure plate 218, a first plurality of electric brake actuators (EBAs) 202, and a second plurality of EBAs 204. for a brake mechanism, such as brake mechanism 100 described above with respect to FIG. 1B. In various embodiments, pressure plate 218 may be an embodiment of pressure plate 118 described above with respect to FIG. 1B. In various embodiments, the first plurality of EBAs 202 may be an embodiment of the first subset of EBAs (e.g., 116a) and the second plurality of EBAs 204 may be embodiment of the second subset of EBAs described above with respect to FIG. 1B. In the illustrated embodiment, the first plurality of EBAs 202 includes a first EBA 202a and a second EBA 202b, the second plurality of EBAs 204 include a third EBA 204a and a fourth EBA 204b. The first plurality of EBAs 202 and the second plurality of EBAs 204 are disposed around a circumference of pressure plate 218 and offset from each other by 90°. Additionally, as depicted, the first plurality of EBAs 202 are interleaved with the second plurality of EBAs 204 such that the first plurality of EBAs 202 are offset from each other by 180° and the second plurality of EBAs 204 are offset from each other by 180°. It should be understood that a brake mechanism (e.g., brake mechanism 100) may include more than four EBAs, that first plurality of EBAs 202 and second plurality of EBAs 204 may include different numbers of EBAs, and/or that each landing gear and wheel assembly may include more than one brake mechanism including multiple EBAs. It should also be understood that the first plurality of EBAs 202 and the second plurality of EBAs 204 need not be circumferentially offset by 90 degrees. Accordingly, it is understood that brake mechanism diagram 200 includes four EBAs 202a, 202b, 204a, 204b for ease of description herein.

In various embodiments, first plurality of EBAs 202 include EBAs that have a parking brake functionality. That is, first EBA 202a and second EBA 202b each include a parking brake mechanism and are each wired to receive parking brake controls from an aircraft (e.g., from BCU 20). The parking brake mechanism (e.g., parking brake mechanism 182) may lock the wheel of an aircraft, to prevent rotation of the wheel, without converting electrical energy to mechanical energy to apply braking force. In various embodiments, second plurality of EBAs 204 include EBAs that do not have the parking brake functionality. That is, third EBA 204a and fourth EBA 204b do not have the parking brake mechanism and/or are not wired to receiving parking brake controls from the aircraft. For example, the second plurality of EBAs 204 may each include the parking brake mechanism but not be wired to receive parking brake instructions. As another example, the second plurality of EBAs 204 may not include the parking brake mechanism and not be wired to receive parking brake instructions. This makes the second plurality of EBAs 204 lighter than the first plurality of EBAs 202. Furthermore, this allows existing aircraft to be retrofit to utilize the electric brake configuration disclosed herein without having to rewire the aircraft.

In various embodiments, the first plurality of EBAs 202 may be positioned around pressure plate 218 in an alternating pattern with the second plurality of EBAs 204. This positioning may, in various embodiments, provide a uniform or substantially uniform force on pressure plate 218 when applying brake pressure to the first plurality of EBAs 202 and not the second plurality of EBAs 204. During typical braking operations to slow motion or provide differential steering of the aircraft, a brake control unit (BCU) (e.g., BCU 20) may send signals to both the first plurality of EBAs 202 and the second plurality of EBAs 204 to activate in order to slow or stop the aircraft. Activating the first plurality of EBAs 202 and the second plurality of EBAs 204 includes applying electrical power to each EBA. The signals to the first plurality of EBAs 202 and the second plurality of EBAs 204 may indicate an amount of braking force to apply. The amount of braking force may be between 0% and 100% of maximum braking force. That is, each of first EBA 202a, second EBA 202b, third EBA 204a, and fourth EBA 204b may apply the same percentage of maximum force to pressure plate 218.

During parking brake operations, the aircraft may send signals only to the first plurality of EBAs 202 to activate. The parking brake mechanism in first EBA 202a and second EBA 202b may be activated to lock the wheels of the aircraft without a sustained or continuous electrical input. In various embodiments, the first plurality of EBAs 202 may be instructed to apply a parking brake force that is about 60% to about 90% of maximum force, and more specifically, about 80% of maximum force. That is, EBA 202a and EBA 202b may each extend a ram (e.g., ram 180) about 60% to about 90% of maximum distance (i.e., extension length) in response to receiving a signal to apply braking force. In this manner, the aircraft receives the same braking force from fewer EBAs for parking brake operations. A separate signal may be sent to engage the parking brake mechanism (e.g., parking brake mechanism 182) to lock the extended ram in position. The electrical power may be discontinued so that the braking force is provided by the parking brake mechanism holding the extended ram in position.

In various embodiments, the parking brake operations may be performed when no braking is being applied by either the first plurality of EBAs 202 or the second plurality of EBAs 204. In these embodiments, the aircraft instruct the first plurality of EBAs 202 to apply the parking brake force described above while not sending instructions to the second plurality of EBAs 204. The aircraft may send the signal to engage the parking brake mechanism of the first plurality of EBAs 202 and remove the electrical power from the first plurality of EBAs 202 so that the braking force is provided by the parking brake mechanisms.

In various embodiments, the parking brake operations may be performed while braking is being applied by the first plurality of EBAs 202 and the second plurality of EBAs 204. In these embodiments, the aircraft may instruct the first plurality of EBAs 202 to increase the braking force to the parking brake force described above while instructing the second plurality of EBAs 204 to maintain braking force. The aircraft may then send the signal to engage the parking brake mechanism of the first plurality of EBAs 202 and remove the electrical power from the first plurality of EBAs and the second plurality of EBAs 204 so that the braking force is provided by the parking brake mechanisms.

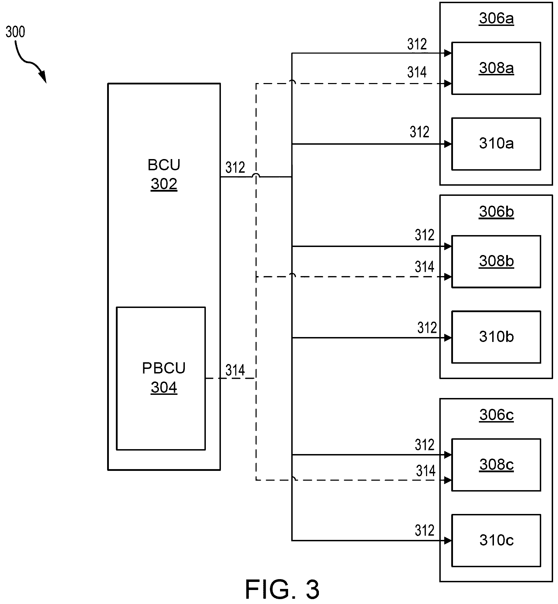

Referring now to FIG. 3, a system 300 is illustrated in accordance with various embodiments. System 300 includes a brake control unit (BCU) 302, a parking brake control unit (PBCU) 304, a first landing gear brake mechanism(s) 306a, a second landing gear brake mechanism(s) 306b, and a third landing gear brake mechanism(s) 306c. First landing gear brake mechanism(s) 306a, second landing gear brake mechanism(s) 306b, and third landing gear brake mechanism(s) 306c may include one or more brake mechanisms depending on the type of aircraft on which they are installed. In various embodiments, PBCU 304 is included in BCU 302. In various embodiments, the functions of BCU 302 and PBCU 304 may be performed by a single control unit. In various embodiments, BCU 302 and PBCU 304 may be distinct and entirely separate controllers. The functions are separated in BCU 302 and PBCU 304 in system 300 illustrated in FIG. 3 for ease of description and understanding.

First landing gear brake mechanism(s) 306a includes a first plurality of electric brake actuators (EBAs) 308a having a parking brake mechanism and a second plurality of EBAs 310a without the parking brake mechanism. Second landing gear brake mechanism(s) 306b includes a first plurality of electric brake actuators (EBAs) 308b having a parking brake mechanism and a second plurality of EBAs 310b without the parking brake mechanism. Third landing gear brake mechanism(s) 306c includes a first plurality of electric brake actuators (EBAs) 308c having a parking brake mechanism and a second plurality of EBAs 310c without the parking brake mechanism.

BCU 302 is connected to first landing gear brake mechanism(s) 306a, second landing gear brake mechanism(s) 306b, and third landing gear brake mechanism(s) 306c by wires running through an aircraft (e.g., aircraft 10). Specifically, BCU 302 is connected to the first plurality of EBAs 308a, 308b, 308c and the second plurality of EBAs 3 10a, 3 10b, 310c of each brake mechanism by wires running through the aircraft. BCU 302 may transmit brake signal 312 to each of the first plurality of EBAs 308a, 308b, 308c and to the each of the second plurality of EBAs 310a, 310b, 310c to provide a braking force to slow or stop the aircraft. In various embodiments, brake mechanisms 306a, 306b, 306c may be controlled independently of each other to provide more responsive braking to control the aircraft.

PBCU 304 is connected to first landing gear brake mechanism(s) 306a, second landing gear brake mechanism(s) 306b, and third landing gear brake mechanism(s) 306c by wires running through an aircraft (e.g., aircraft 10). Specifically, PBCU 304 is connected to the first plurality of EBAs 308a, 308b, 308c of each brake mechanism by wires running through the aircraft. PBCU 304 may transmit parking brake signal 314 to each of the first plurality of EBAs 308a, 308b, 308c to engage a parking brake mechanism (e.g., parking brake mechanism 180) to secure the aircraft in a stopped position. In various embodiments, brake mechanisms 306a, 306b, 306c may be controlled independently of each other.

BCU 302 may include one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. BCU 302 may further include memory to store data, executable instructions, system program instructions, and/or controller instructions to implement the control logic of BCU 302.

PBCU 304 may include one or more processors configured to implement various logical operations in response to execution of instructions, for example, instructions stored on a non-transitory, tangible, computer-readable medium. The one or more processors can be a general purpose processor, a microprocessor, a microcontroller, a digital signal processor (DSP), an application specific integrated circuit (ASIC), a field programmable gate array (FPGA) or other programmable logic device, discrete or transistor logic, discrete hardware components, or any combination thereof. PBCU 304 may further comprise memory to store data, executable instructions, system program instructions, and/or controller instructions to implement the control logic of PBCU 304.

System program instructions and/or controller instructions may be loaded onto a non-transitory, tangible computer-readable medium having instructions stored thereon that, in response to execution by a controller, cause the controller to perform various operations. The term "non-transitory" is to be understood to remove only propagating transitory signals per se from the claim scope and does not relinquish rights to all standard computer-readable media that are not only propagating transitory signals per se.

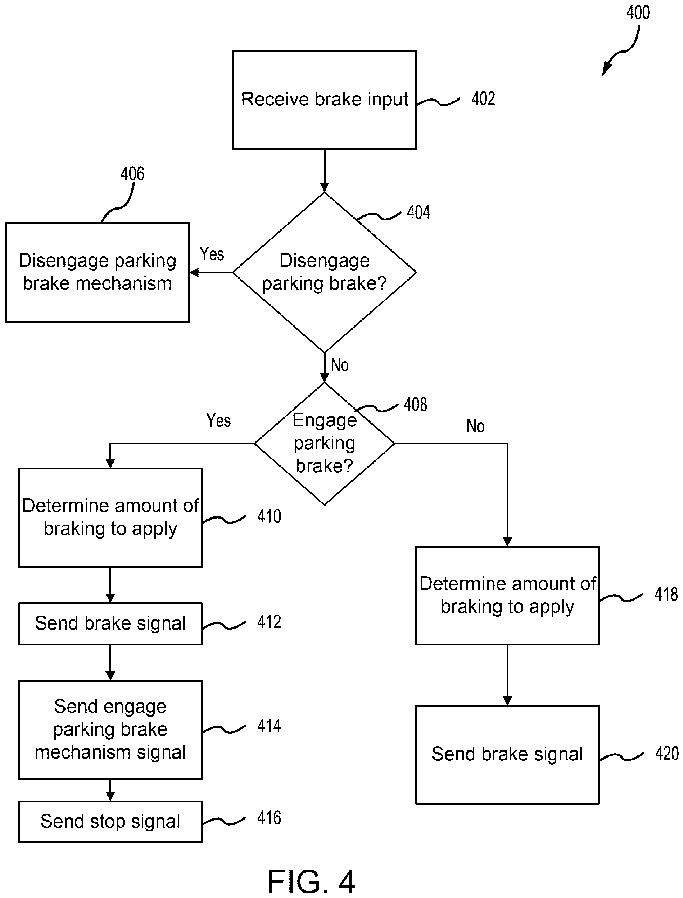

Referring now to FIG. 4, a method 400 for controlling a brake mechanism is illustrated, in accordance with various embodiments. Method 400 may be performed by BCU 302 including PBCU 304 as described above with respect to FIG. 3. BCU 302 may be connected to one or more brake mechanisms 306a, 306b, 306c that each include a first plurality of electric brake actuators (EBAs) 308a, 308b, 308c, that include a parking brake mechanism and include a second plurality of EBAs 310a, 310b, 310c that do not include a parking brake mechanism.

At block 402, BCU 302 receives a brake input. The brake input may be from an aircraft (e.g., aircraft 10). In various embodiments, the brake input may be based on a pilot or other user input. At decision block 404, BCU 302 determines whether the brake input is an instruction to disengage the parking brake. If it is determined that the brake input is to disengage the parking brake, method 400 proceeds to block 406. At block 406, BCU 302 sends a signal to disengage the parking brake to the first plurality of EBAs 308a, 308b, 308c. Disengaging the parking brake includes disengaging the parking brake mechanism that locks the wheels, preventing rotation. Returning to decision block 404, if instead, it is determined that the brake input is not to disengage the parking brake, method 400 proceeds to decision block 408.

At decision block 408, BCU 302 determines whether the brake input is to engage the parking brake. If it is determined that the brake input is to engage the parking brake, method 400 proceeds to block 410. At block 410, BCU 302 determines an amount of braking to apply by the first plurality of EBAs 308a, 308b, 308c. At block 412, BCU 302 sends a brake signal to the first plurality of EBAs 308a, 308b, 308c to apply an electric power to apply a braking force to brake mechanisms 306a, 306b, 306c. Applying the braking force may include extending the ram to engage the pressure engage the pressure plate. In various embodiments, the braking force may be a predetermined braking force for applying the parking brake. In various embodiments, the predetermined braking force may be about 60% to about 90% of the maximum braking force, and more specifically, about 80% of the maximum braking force. At block 414, BCU 302 sends an engage parking brake mechanism signal to the first plurality of EBAs 308a, 308b, 308c causing the first plurality of EBAs 308a, 308b, 308c to lock the wheel at the applied braking force. At block 416, BCU 302 sends a stop brake signal, or alternatively, stops sending the brake signal. This removes the electric power from the first plurality of EBAs 308a, 308b, 308c so that the only braking force being applied is applied by the parking brake mechanism.

In various embodiments, BCU 302, and more specifically, PBCU 304 may not be connected to the second plurality of EBAs 310a, 310b, 310c. In various embodiments, BCU 302 may be connected to the second plurality of EBAs 310a, 31 0b, 310c but does not send the parking brake signal to the second plurality of EBAs 310a, 310b, 310c. At block 414, BCU 302 sends an engage parking brake mechanism signal to the first plurality of EBAs 308a, 308b, 308c to engage the parking brake mechanism to lock the wheels of the aircraft. At this point, the electric power may be removed.

Returning to decision block 408, if instead, it is determined that the brake input is not to engage the parking brake, method 400 proceeds to block 418. At block 418, BCU 302 determines an amount of braking to apply based on the received brake input. At block 420, BCU 302 sends a brake signal indicating the amount of braking to apply to the first plurality of EBAs 308a, 308b, 308c and the second plurality of EBAs 3 10a, 3 10b, 310c.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A brake assembly coupled to a wheel, comprising:
a plurality of stator disks (124);
a plurality of rotor disks (122) interleaved with the plurality of stator disks (124) and configured to apply a braking force to the wheel;
a pressure plate (118) disposed adjacent a rotor disk of the plurality of rotor disks (122);
a first electric brake actuator disposed adjacent the pressure plate (118) and configured to apply the braking force to the pressure plate (118), the first electric brake actuator including a parking brake mechanism; and
a second electric brake actuator disposed adjacent the pressure plate (118) and configured to apply the braking force to the pressure plate (118).

2. The brake assembly of claim 1, further comprising:
a first plurality of wires coupled to the first electric brake actuator and to the second electric brake actuator, the first plurality of wires configured to transmit a braking signal to the first electric brake actuator and to the second electric brake actuator; and
a second plurality of wires coupled to the first electric brake actuator, the second plurality of wires configured to transmit a parking brake signal to the first electric brake actuator.

3. The brake assembly of claim 2, further comprising:
a third electric brake actuator disposed adjacent the pressure plate (118) and configured to apply the braking force to the pressure plate (118), the third electric brake actuator including the parking brake mechanism; and
a fourth electric brake actuator disposed adjacent the pressure plate (118) and configured to apply the braking force to the pressure plate (118).

4. The brake assembly of claim 3, wherein the first electric brake actuator is disposed between the second electric brake actuator and the fourth electric brake actuator and opposite the third electric brake actuator.

5. The brake assembly of claim 1, wherein the first electric brake actuator is configured to receive a parking brake signal and to apply the braking force in response to the parking brake signal and wherein the second electric brake actuator is not configured to receive the parking brake signal, and optionally wherein the first electric brake actuator is configured to engage the parking brake mechanism after applying the braking force, the parking brake mechanism preventing the wheel from rotating.

6. A system, comprising:
a brake assembly coupled to a wheel;
a first electric brake actuator configured to engage the brake assembly, the first electric brake actuator including a parking brake mechanism;
a second electric brake actuator configured to engage the brake assembly;
a controller; and
a memory operatively coupled to the controller, the memory comprising instructions stored thereon that, when executed by the controller, cause the controller to:
receive a first request to apply a first braking force to the brake assembly;
send a first signal to the first electric brake actuator and to the second electric brake actuator to apply the first braking force to cause the wheel to stop rotating;
receive a second request to engage the parking brake mechanism; and
send a second signal to the first electric brake actuator to apply a second braking force to the brake assembly.

7. The system of claim 6, wherein the second braking force is twice the first braking force.

8. The system of claim 6 or 7, further comprising:
a first plurality of wires operatively coupling the controller to the first electric brake actuator and to the second electric brake actuator, the first plurality of wires configured to transmit a braking signal; and
a second plurality of wires operatively coupling the controller to the first electric brake actuator, the second plurality of wires configured to transmit a parking brake signal.

9. The system of claim 8, further comprising:
a third electric brake actuator configured to engage the brake assembly, the third electric brake actuator including the parking brake mechanism; and
a fourth electric brake actuator configured to engage the brake assembly, wherein the first electric brake actuator is disposed between the second electric brake actuator and the fourth electric brake actuator and the second electric brake actuator is disposed between the first electric brake actuator and the third electric brake actuator, and optionally
wherein the first plurality of wires further operatively couples the controller to the third electric brake actuator and to the fourth electric brake actuator, and
wherein the second plurality of wires further operatively couples the controller to the third electric brake actuator.

10. The system of any of claims 6 to 9, wherein the instructions, when executed by the controller, further cause the controller to:
receive a third request to disengage the parking brake mechanism; and
send a disengage signal, in response to the third request, to the first electric brake actuator to disengage the parking brake mechanism, and/or when executed by the controller, further cause the controller to:
send a third signal, after the parking brake mechanism is engaged, to the first electric brake actuator and to the second electric brake actuator, the third signal commanding the first electric brake actuator to stop applying the second braking force to the brake assembly, and the third signal commanding the second electric brake actuator to stop applying the first braking force to the brake assembly.

11. A method, comprising:
receiving, by a controller, a first request to apply a parking brake to a wheel;
sending, by the controller, a brake signal to a first electric brake actuator to apply a braking force in response to the first request, the first electric brake actuator coupled to a first brake assembly, the first brake assembly coupled to the wheel, and the first brake assembly including the first electric brake actuator and a second electric brake actuator;
sending, by the controller, a parking mechanism engage signal to the first electric brake actuator to engage the parking brake mechanism of the first electric brake actuator; and
sending, by the controller, a signal to stop applying the braking force by the first electric brake actuator.

12. The method of claim 11, further comprising:
receiving, by the controller, a second request to disengage the parking brake; and
sending, by the controller, a disengage parking brake signal to the first electric brake actuator.

13. The method of claim 11 or 12, further comprising:
receiving, by the controller, a third request to apply the braking force to the wheel to cause the wheel to stop rotating, the third request being received before the first request; and
sending, by the controller, a brake signal to the first electric brake actuator and to the second electric brake actuator, and optionally wherein the sending the signal to stop applying the braking force by the first electric brake actuator further includes sending the signal to stop applying the braking force to the second electric brake actuator.

14. The method of any of claims 11 to 13, wherein the first brake assembly further includes a third electric brake actuator and a fourth electric brake actuator, the method further comprising:
sending, by the controller, the engage parking brake signal to the third electric brake actuator.

15. The method of any of claims 11 to 14, further comprising:
sending, by the controller, the engage parking brake signal to a fifth electric brake actuator coupled to a second brake assembly in response to the first request, the second brake assembly including the fifth electric brake actuator and a sixth electric brake actuator, the second brake assembly coupled to the wheel; and
sending, by the controller, the parking mechanism engage signal to the fifth electric brake actuator, and/or further comprising:
sending, by the controller, the engage parking brake signal to a seventh electric brake actuator coupled to a third brake assembly in response to the first request, the third brake assembly including the seventh electric brake actuator and an eighth electric brake actuator, the third brake assembly coupled to a second wheel; and
sending, by the controller, the parking mechanism engage signal to the seventh electric brake actuator.
